# EUROPEAN PATENT APPLICATION

(11) **EP 1 489 330 A1**
(43) Date of publication of application: **22.12.2004**
(21) Application number: 03743038.6
(22) Date of filing: 26.02.2003
(51) Int. Cl.: F16D 65/12, B60B 3/16, B60B 27/00, F16C 19/18

(54) **BEARING UNIT FOR WHEELS**

(30) Priority: 28.02.2002 JP 2002053402
(71) Applicant: NSK LTD.,, Shinagawa-ku, Tokyo 141-8560 (JP)
(72) Inventor: SAKAMOTO, Junshi, c/o NSK LTD., Fujisawa-shi, Kanagawa 251-0021 (JP)
(74) Representative: Klingseisen, Franz
(86) International application number: PCT/JP2003/002149
(87) International publication number: WO 2003/072974

(57) **Abstract**

A concave groove 38 is formed all the way around the circumference on a part of an installation surface 14 having its center at the central axis of a hub 8, such that it is concave inward from the installation surface. Also, installation holes 15 for press fitting studs 9 thereto are opened on a substantially middle section in the width direction of a bottom section of the concave groove 38. When W is taken to be the width of the concave groove in the radial direction and d is taken to be the inner diameter of the installation holes, then W = d + (5 to 25 mm). By this configuration, it is possible to inhibit the deformation of the installation surface 14 by the press insertion of the studs 9, so the above problems can be solved. Thereby, judder is prevented from occurring during braking by inhibiting runout of the rotor 2 fixed to the installation surface 14 of the installation flange 13.

## Description

### BACKGROUND OF THE INVENTION

### 1. Field of the Invention

This invention relates to an improvement of a bearing unit for wheel for supporting a wheel for automobile and rotating members for braking such as a rotor, a brake drum and so forth.

### 2. Description of Background Art

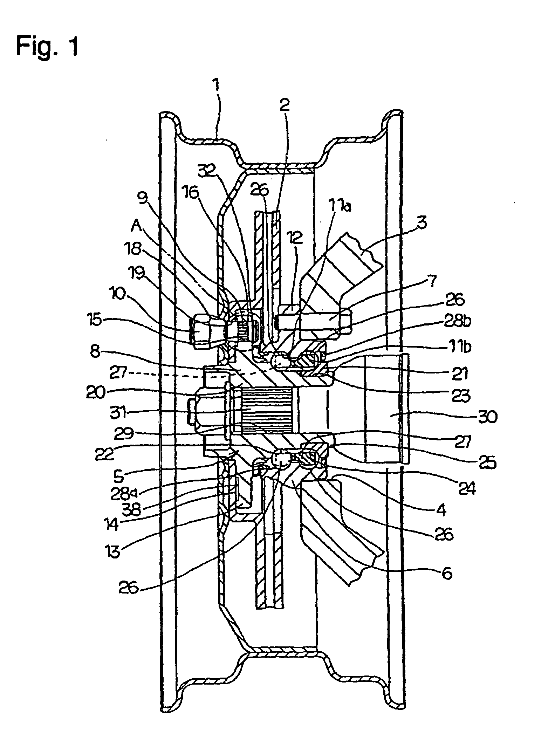

A wheel 1 constituting a wheel of an automobile and a rotor 2 of a disk brake functioning as a damping device are rotatably supported by a knuckle 3 of a suspension device, for example, in the structure as illustrated in Fig. 1 showing a first example of the embodiment of the present invention. That is, an outer ring 6 of a bearing unit 5 for wheel, which is a stationary member that does not rotate even in use, is fixed to circular support holes 4 that are formed in the knuckle 3 by a plurality of bolts 7. On the other hand, the wheel 1 and rotor 2 are securely connected to a hub 8 of the bearing unit 5, which is a rotating member that rotates in use, by a plurality of studs 9 and nuts 10.

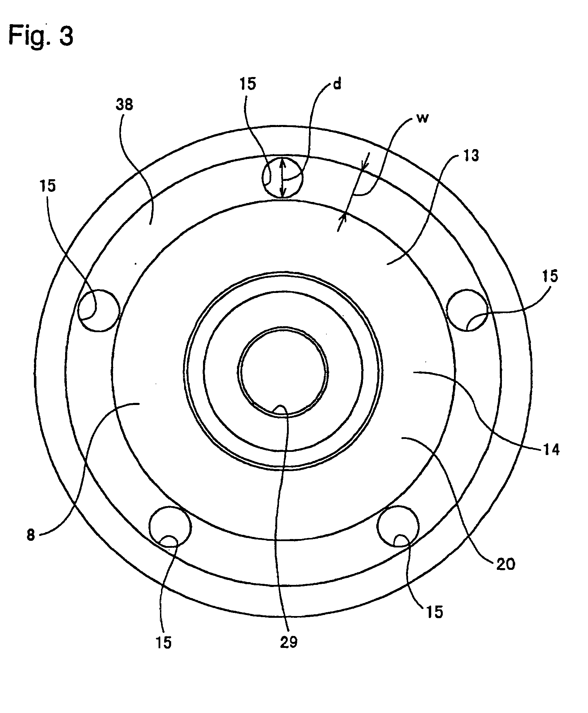

The outer ring 6 is formed with a double row of outer raceways 11a and 11b, which are stationary raceways respectively, around the inner peripheral surface thereof and a connection flange 12 around the outer peripheral surface in the middle section thereof . This kind of outer ring 6 is fixed to the knuckle 3 by connecting the connection flange 12 to the knuckle 3 using the bolts 7. On the other hand, an installation flange 13 is formed on a portion of the outer peripheral surface of the hub 8 that protrudes from the opening on the outside end of the outer ring 6 (the "outside" in the axial direction is the side located outwardly in the width direction when installed in an automobile, i.e. , the left side in each of the figures except Fig. 3, while the "inside" in the axial direction is the middle in the width direction when installed in the automobile, i.e., the right side in each of the figures except Fig. 3).

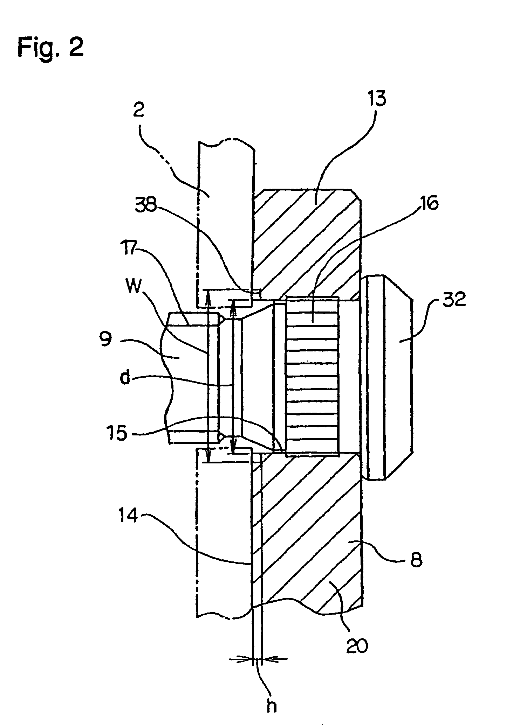

The wheel 1 and the rotor 2 are securely connected to an installation surface 14 formed on one side surface (the outside surface in the example shown in the figures) of the installation flange 13. For this purpose, a number of installation holes 15 that pass through both side surfaces of the installation flange 13 respectively are formed at a plurality of positions around the circumferential direction of the installation flange 13 on the same circumference having its center at the central axis of the hub 8. Also, each of the studs 9 is formed with a serration portion 16 on the outer peripheral surface of the base end section (right end section in Fig. 1) thereof and a male thread portion 17 (see Figs. 2, 4 and 5 to be described below) on the outer peripheral surface of the tip half section (left half section in Fig. 1) thereof. Also, the base end portion of each of the studs 9 is fixed to the installation flange 13 by press fitting of the serration portion 16 into the corresponding installation hole 15, such that the studs 9 are prevented from rotating with respect to the installation flange 13.

Also, the rotor 2 is placed over the installation surface 14, and furthermore, the wheel 1 is placed over the surface on one side of the rotor 2. In this condition, the tip end section of each of studs 9 is inserted through the through holes 18, 19 that are respectively formed in the wheel 1 and rotor 2, and protrude from one side surface of the wheel 1. Also, the nuts 10 are screwed and tightened onto the male thread portions 17 that are formed on the tip sections of the studs 9 that protrude from the surface on one side of the wheel 1. With this configuration, the wheel 1 and rotor 2 are securely connected to the installation surface 14 of the installation flange 13.

Moreover, the hub 8 comprises a hub body 20 and an inner ring 21. The hub body 20 is provided with a first inner raceway 22 as a rotating raceway which is directly formed around the outer peripheral surface in the middle section of the hub body 20 and in the portion opposite the outer raceway 11a on the outside of the double row of outer raceways 11a and 11b. Furthermore, the inner ring 21 is securely fitted onto a small diameter stepped portion 23 that is formed on the outer peripheral surface in the inside end section of the hub body 20, to form the above hub 8. Also, a second inner raceway 24, which is also a rotating raceway, is formed around the outer peripheral surface of the inner ring 21, such that it faces the outer raceway 11b on the inside of the double row of outer raceways 11a and 11b. Also, in the example as shown in the figures, the inside end surface of the inner ring 21 is pressed by a crimped portion 25 that is formed by plastically deforming the inside end section of the hub body 20 outward in the radial direction, such that the inner ring 21 is fixed to the hub body 20.

Furthermore, a plurality of balls 26, which are rolling members respectively, are rotatably supported between each of the outer raceways 11a and 11b and the corresponding one of the first and second inner raceways 22 and 24 with retainers 27 holding the balls. With this configuration, a double row angular type ball bearing is formed with a back-to-back duplex, such that the hub 8 is rotatably supported in the inner side of the outer ring 6 and the rolling bearing so as to receive radial loads and thrust loads. In addition, seal rings 28a, 28b are provided between the inner peripheral surface on both sides of the outer ring 6 and the outer peripheral surface on the middle section of the hub 8 and the outer peripheral surface on the inside end section of the inner ring 21, such that the internal space where the balls 26 are located is sealed from the external space. Furthermore, the example shown in the figures is a bearing unit 5 for drive wheels (rear wheels for an FR or RR vehicle, front wheels for an FF vehicle, and all of the wheels for a 4WD vehicle), so a spline hole 29 is formed in the central section of the hub body 20. Moreover, a spline shaft 31 attached to an constant velocity joint 30 is inserted into the spline hole 29.

When the rolling bearing unit 5 for wheel as described above is used, as shown in Fig. 1, the outer ring 6 is fixed to the knuckle 3 while the wheel 1, which is combined with a tire not shown in the figure, and the rotor 2, which is a rotating member for braking, are fixed to the installation flange 13 of the hub 8. Also, the rotor 2 is combined with a support and a caliper (not shown in the figures) that are fixed to the knuckle 3, to form a disk brake for braking. When braking, a pair of pads located on both sides of the rotor 2 is pressed against both side surfaces of the rotor 2, which are friction surfaces for braking. In this specification, the friction surface for braking means both side surfaces in the axial direction of the rotor when the rotating member for braking is a rotor, and means an inner peripheral surface of the drum when the rotating member for braking is a drum.

Meanwhile, it is known that a vibration with unpleasant noise called judder often occurs during braking of an automobile. While various causes of this kind of vibration are known, such as a non-uniform friction state between a side surface of the rotor 2 and a lining of the pad, runout of the rotor 2 is also known as a major cause. Namely, while the surface of the rotor 2 has to be originally assembled to be at right angle with the center of rotation of the rotor 2, due to unavoidable tolerances during manufacturing, it is difficult to obtain a perfect right angle. As a result, when driving an automobile, a little runout of the side surface of the rotor 2 in the direction of the rotation axis (in the right and left direction in Fig. 1) cannot be avoided.

If this kind of runout (the amount of displacement in the right and left direction in Fig. 1) increases, the judder occurs when the lining of the pair of pads is pressed for braking against the both side surfaces of the rotor 2. Also, in the case where the drum of a drum brake is fixed to the side surface of the installation flange 13, vibration such as judder occurs when a brake shoe is pressed against the inner peripheral surface of the drum unless this inner peripheral surface is completely in parallel with the center of rotation of the drum. In order to inhibit the judder due to these causes, it is important to inhibit (or improve) the runout (axial runout) of the side surfaces of the rotor 2 in the axial direction or the runout of the inner peripheral surface of the drum in the radial direction.

However, in the case of a conventional bearing unit for wheel, there was a possibility that this kind of runout of the friction surface for braking of the rotating member for braking (side surfaces of a rotor 2, or an inner peripheral surface of a drum) would occur easily due to the following reasons.

At first, in the case of a so-called third-generation bearing unit 5 for wheel as shown in Fig. 1 in which a first inner raceway 22 is formed directly around the outer peripheral surface in the middle section of the hub 8, keeping the first and second inner raceways 22, 24 in parallel is troublesome. In other words, in the case of a so-called second-generation bearing unit for wheel in which a pair of inner rings are securely fitted onto the hub body, the diameter of the outer peripheral surface of the wide small diameter stepped portion, which is formed around the hub body for fitting the pair of inner rings thereto, does not change along almost the entire length of the section where both of the inner rings fit, and this surface is a single cylindrical surface. This kind of single cylindrical surface is relatively easy to manufacture, therefore, when the first and second inner raceways are formed around the outer peripheral surface of the hub by fitting the pair of the inner rings having the same diameter onto the small diameter stepped portion, it is easy to keep both of the inner raceways in parallel with respect to the center of rotation as long as the precision of the pair of inner rings can be secured.

On the other hand, in the case of the third-generation bearing unit for wheel, the portion where the first inner raceway is formed in the middle section in the axial direction of the hub body 20, and the small diameter stepped portion 23 around which the inner ring 21 formed with the inner raceways 24 is fitted, have a stepped shape. Accordingly, compared with the second-generation bearing unit for wheel, there is a possibility of runout of the friction surface for braking of the rotating member for braking due to the loss of parallelism between the first and second inner raceways 22, 24.

Also, as shown in Fig. 1, in the case that the inner ring 21 is fixed to the hub body 20 by pressing the inside end surface of the inner ring 21 with a crimped portion 25 that is formed by plastically deforming the inside end section of the hub body 20 outward in the radial direction, such that the inner ring 21 is fixed to the hub unit 20, there is a possibility that the installation flange 13 will become slightly deformed when forming this crimped portion 25 depending upon the way of fixing the hub body 20. In other words, when forming the crimped portion 25, by supporting and fixing the installation flange 13 in place and applying a large load to the inside end section of the hub body 20 in order to plastically deform this inside end section, there is a possibility that the installation surface 14 formed on one side surface of the installation flange 13 will be slightly deformed due to this load. As a result, there is a possibility that the friction surface for braking of the rotating member for braking, which is fixed onto the installation surface 14, becomes prone to run out.

Furthermore, in the case of the structure shown in Fig. 1, the plurality of the studs 9 supporting the rotating member for braking are press fitted in and fixed to the respective installation holes 15 formed in the installation flange 13. Therefore, during press fitting, due to the engagement of the inner peripheral surface of the installation hole 15 with the serration portion 16 of the stud 9, there is a possibility that the sections around the opening edge peripheral portion of each installation hole 15 which is a portion of the installation surface 14 slightly protrudes in the direction such that the above sections are convex with respect to installation surface 14. Particularly, when the amount that the opening edge peripheral portion protrude differ for each installation hole 15, it becomes easy for the friction surface for braking of the rotating member for braking that is connected to and fixed on the installation surface 14 to run out, so this condition is undesirable.

As described above, in the case that the first inner raceway 22 is directly formed on the hub body 20 and the crimped portion 25 is also formed on the inside end of the hub body 20, it becomes easy for the friction surface for braking of the rotating member for braking to run out, so it is particularly important to inhibit the runout of the friction surface for braking due to this kind of press fitting of the studs 9.

Taking the above problems into consideration, the bearing unit for wheel according to the present invention has been made in order to prevent the runout of the friction surface for braking due to press fitting of the studs, and to realize the structure for preventing the occurrence of judder due to the runout of the friction surface.

### SUMMARY OF THE INVENTION

In accordance with one aspect, a bearing unit for wheel of the present invention comprises: a stationary member which has a stationary raceway and does not rotate even in use; a rotating member which has a rotating raceway and rotates in use; an installation flange provided around the outer peripheral surface of the rotating member; a plurality of installation holes which are formed such that they pass through the installation flange in the axial direction; a plurality of studs fixed to the installation flange by press fitting of the respective base end sections thereof into the installation holes; and rolling members provided between the stationary raceway and rotating raceway; and during use, a rotating member for braking being connected and fixed to an installation surface which is provided on one side surface of the installation flange by the studs and nuts that are screwed onto the studs, wherein a concave groove is formed all the way around the circumference on a part of the installation surface such that it is concave inward from the installation surface, the installation holes are opened in a bottom section of the concave groove, and when W is taken to be the width of the concave groove in the radial direction and d is taken to be the inner diameter of the installation holes, then W = d + (5 to 25 mm).

Also, in accordance with another aspect, a bearing unit for wheel comprises : a stationary member which has a double row of stationary raceways and does not rotate even in use; a rotating member which has a double row of rotating raceways and rotates in use; an installation flange provided around the outer peripheral surface of the rotating member; a plurality of installation holes which are formed such that they pass through the installation flange in the axial direction; a plurality of studs fixed to the installation flange by press fitting of the respective base end sections thereof into the installation holes; and a plurality of rolling members provided between each of the stationary raceways and a corresponding one of the rotating raceways.

Furthermore, of the stationary member and the rotating member, the member that is located on the inside in the radial direction is provided with a first inner raceway which is the stationary raceway or rotating raceway directly formed around the outer peripheral surface on the middle section in the axial direction, a small diameter stepped portion formed around the outer peripheral surface on one end section in the axial direction, and an inner ring securely fitted onto the small diameter stepped portion. Also, the inner ring is formed with a second inner raceway, which is the stationary raceway or rotating raceway, and the end surface thereof is held in place by a crimped portion that is formed by plastically deforming one of the end sections of the aforementioned member outward in the radial direction.

Moreover, a rotating member for braking is connected and fixed to the installation surface provided on one side surface of the installation flange by the studs and nuts that are screwed on to the studs.

Particularly, in the bearing unit for wheel of the present invention, a concave groove is formed all the way around the circumference on a part of the installation surface having its center at the central axis of the rotating member, such that it is concave inward from the installation surface. Also, in addition to this, the installation holes are opened in a bottom section of the concave groove. Moreover, when W is taken to be the width of the concave groove in the radial direction and d is taken to be the inner diameter of the installation holes, then it is preferred that W = d + (5 to 25 mm).

With the bearing unit for wheel of the present invention configured as described above, it is possible to inhibit judder during braking. In other words, even when the opening edge peripheral portions of the installation holes protrude in a direction such that they are convex with respect to the installation surface due to the engagement between the outer peripheral surface of the studs and the inner peripheral surface of the installation holes during the press insertion of the studs, the protrusion occurs only inside the concave groove located in the opening edge peripheral portion. Therefore, it is possible to prevent deformation of the installation surface due to this protrusion, and thus it becomes difficult for the friction surface for braking of the rotating member for braking that is fixed to the installation surface to run out. Also, even when the amount of protrusion of each installation holes differs, such protrusions occur inside the concave groove as described above, so that it is possible to inhibit the runout of the friction surface for braking of the rotating member for braking due to the difference in protruding amounts. As a result, it is possible to inhibit the judder due to this kind of runout of the friction surface for braking.

Furthermore, when the width in the radial direction of the concave groove is taken to be W and the inner diameter of the installation holes is taken to be d, then W = d + (5 to 25 mm). In other words, the minimum distance from the opening edges of the installation holes to the edge in the width direction of the concave groove is 2.5 to 12.5 mm. Therefore, while inhibiting the deformation of the installation surface due to the protrusion described above, it is possible to maintain the area of contact between the installation surface and the rotating member for braking, and to stably support (without any runout) the rotating member for braking. When the width W of the concave groove is less than d + 5 mm ( D < d + 5 mm) (the distance from the opening edges of the installation holes to the edge in the width direction of the concave groove becomes less than 2. 5 mm) , it becomes easy for the installation surface to deform due to the press fitting of the studs. Also, when the installation surface deforms, the runout of the friction surface for braking of the rotating member for braking becomes large, and it becomes easy for judder to occur. On the other hand, when the width W of the concave groove is greater than d + 25 mm (D > d + 25 mm) (the distance from the opening edges of the installation holes to the edge in the width direction of the concave groove becomes greater than 12.5 mm) , it becomes difficult to maintain the contact area between the installation surface and the rotating member for braking. Particularly, when the nuts are screwed onto the studs and tightened, the deformation of the rotating member for braking becomes large, so that the support of the rotating member for braking becomes unstable (it becomes easy for runout to occur). As a result, the runout of the friction surface for braking of the rotating member for braking becomes large and it become easy for judder to occur.

The following table shows the results of tests conducted by the inventors of the present invention using the bearing unit for wheel as shown in Fig. 1 in order to find the relationship between the width W of the concave groove (refer to Figs. 2 and 3 to be described below) and the occurrence of judder.

**[table 1]**

| concave groove width W[mm] | verification of judder |
|---|---|
| installation hole inner diameter d + 1 | × |
| installation hole inner diameter d + 2 | × |
| installation hole inner diameter d + 3 | × |
| installation hole inner diameter d + 4 | × |
| installation hole inner diameter d + 5 | ○ |
| installation hole inner diameter d + 8 | ○ |
| installation hole inner diameter d + 10 | ○ |

In the table 1, the "○" mark indicates that there was hardly any occurrence of judder, the " × " mark indicates that judder was enough to become a problem. As apparent from this table 1, when the width W of the concave groove was greater than the inner diameter d of the installation holes plus 5 mm (D ≧ d + 5 mm), the occurrence of judder was inhibited. In other words, the deformation of the opening edges of the installation holes due to the press fitting of the studs cannot extend beyond 2.5 mm from the opening edges of the installation holes.

### BRIEF DESCRIPTION OF DRAWINGS

Fig. 1 is a sectional view showing a first example of the embodiment of the present invention with a wheel and a rotor being assembled.
Fig. 2 is an enlarged cross sectional view corresponding to section A in Fig. 1.
Fig. 3 is a view of the hub body as seen from the left in Fig. 1.

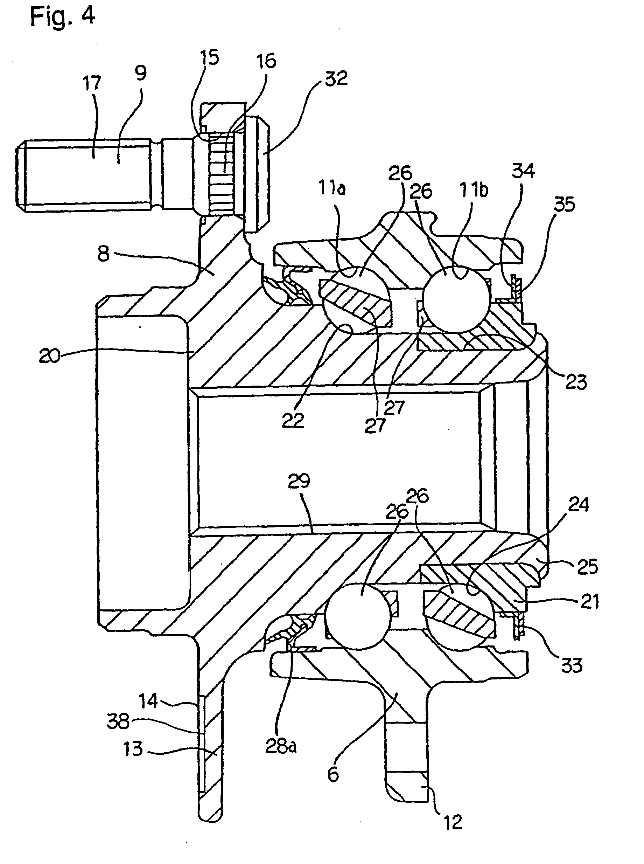

Fig. 4 is a cross sectional view showing a second example of the embodiment of the present invention.

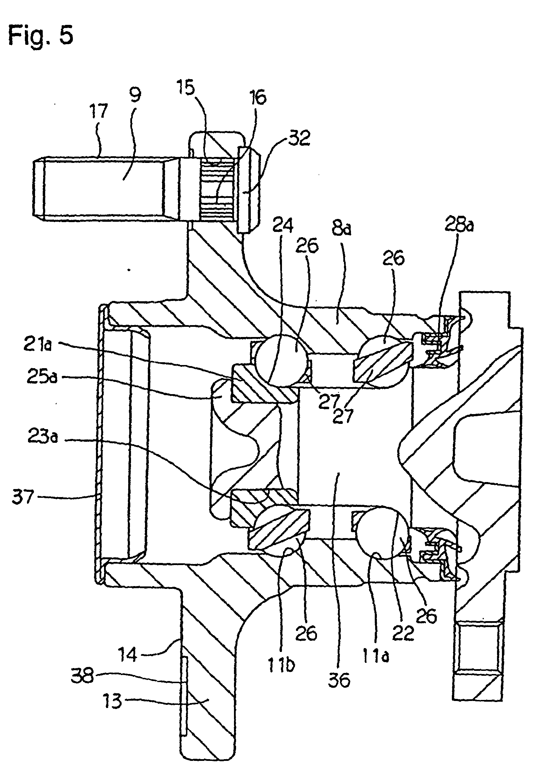

Fig. 5 is a cross sectional view showing a third example of the embodiment of the present invention.

### Description of the Preferred Embodiments

Figs. 1 to 3 show a first example of the embodiment of the present invention. The feature of the present invention is sufficiently securing the surface precision of the installation surface 14, which is one side surface of the installation flange 13 that is formed on the outer peripheral surface of the hub 8 as a rotating member, so as to inhibit the runout of the rotor 2, which is a rotating member for braking. The other basic structures and functions of bearing unit for wheel 5 are the same as those explained above for the prior art with reference to Fig. 1, so any redundant explanation will be omitted or simplified, and the following description is focused on the feature of the present invention.

The outer peripheral surface of the hub body 20 of the hub 8 is provided with the installation flange 13 for fixing the wheel 1 of a travelling wheel and the rotor 2 as a rotating member for braking. The installation holes 15 are formed at a plurality of positions (5 in the case of this example) in the circumferential direction of the installation flange 13 such that they are evenly spaced and located on the same circumference having its center at the center axis of the hub 8, and the base end sections of studs 9 are press fitted inside these installation holes 15. Each of the studs 9 is formed respectively with an outward facing flange-shaped rim portion 32 formed around the surface of its base end, the serration section 16 formed around the outer peripheral surface near the base end portion and the male-screw portion 17 for fixing a nut 10 formed around its tip half portion.

Particularly, in the case of this example, a concave groove 38 is formed all the way around the circumference on the part of the installation surface 14 having its center at the central axis of the hub 8, such that it is concave inward from the installation surface 14. Also, the installation holes 15 are opened on a substantially middle section in the width direction of a bottom section of the concave groove 38. Moreover, when W is taken to be the width of the concave groove 38 in the radial direction and d is taken to be the inner diameter of the installation holes 15, then W = d + (5 to 25 mm). The substantially middle section in the width direction is a section where the distance between the opening edges of the installation holes 15 and the both edges in the width direction of the concave groove 38 is within a range of 2.5 to 12.5 mm on both the inner-diameter side and the outer-diameter side. However, as long as the distance between each of the opening edges of the installation holes 15 and both edges in the width direction of the concave groove 38 is maintained within to be at least 2.5 mm, these installation holes 15 are not limited to opening up in the geometrical center of the concave groove 38. Also, the depth h in the axial direction of the concave groove 38 is taken to be greater than the amount of deformation (0.1 to 0.2 mm) of the installation surface 14 due to the press fitting of the studs 9, however, about 0.5 mm is sufficient even when extra space is allowed (0.2 mm ≦ h ≦ 0.5 mm) . By keeping the depth h of the concave groove 38 to a maximum of about 0.5 mm, the decrease in strength of the installation flange 13 due to the formation of this concave groove 38 can be mostly ignored.

In accordance with the bearing unit for wheel of the present example configured as described above, it is possible to inhibit judder during braking. In other words, even when the edge portions around the openings of the installation holes 15 protrude in a direction such that they are convex with respect to the installation surface 14 due to the engagement between the outer peripheral surface of the studs 9 and the inner peripheral surface of the installation holes 15 when press fitting the studs 9, that protrusion occurs only inside the concave groove 38 located in the edges portions around the openings.

Therefore, it is possible to prevent the installation surface 14 from being deformed due to this protrusion, and it becomes difficult for the friction surface for braking of the rotating member for braking (i.e., the side surface of the rotor 2, or the inner peripheral surface of the drum) that is fixed to the installation surface 14 to run out. In addition, even when the amounts of protrusion of each installation holes 15 differ, such protrusion occurs inside the concave groove 38 as described above, so that it is possible to inhibit the runout of the friction surface for braking of the rotating member for braking due to the difference in the amounts of protrusion. As a result, it is possible to inhibit the judder due to this kind of runout of the friction surface for braking.

Furthermore, since the width in the radial direction of the concave groove 38 is taken to be W and the inner diameter of the installation holes 15 is taken to be d, then W = d + (5 to 25 mm), it is possible to inhibit the deformation of the installation surface 14 due to the protrusion described above, as well as to maintain the contact area between the installation surface 14 and the rotating member for braking, and to stably support (without any runout) the rotating member for braking. When the width W of the concave groove 38 is less than d + 5 mm (D < d + 5 mm) , runout of the friction surface for braking of the rotating member for braking due to deformation of the installation surface 14 caused by the press fitting of the studs 9 becomes large, and it becomes easy for judder to occur. On the other hand, when the width W of the concave groove 38 is greater than d + 25 mm (D > d + 25 mm), it becomes difficult to maintain the contact area between the installation surface 14 and the rotating member for braking. Particularly, when the nuts 10 are screwed onto the studs 9 and tightened, the deformation of the rotating member for braking becomes large, so that the support of the rotating member for braking becomes unstable (it becomes easy for runout to occur) . As a result, the runout of the friction surface for braking of the rotating member for braking becomes large, and it become easy for judder to occur.

In the case of this example, the studs 9 are press fitted into the installation holes 15 by engaging the outer peripheral surface of the serration portion 16 formed on the studs 9 with the installation hole 15, however, the structure is not limited thereto. For example, the studs can be press fitted into the installation holes only by interference fit, or alternatively with making the installation holes a non-circular shape, the part of the outer peripheral surface of the studs that fits with the inner peripheral surface of the installation holes can similarly be formed into a non-circular shape, and these non-circular parts can be press fitted together by interference fit. In brief, the present invention can be applied to other kinds of construction as long as the construction is such that the studs are press fitted into the installation holes and it is possible to prevent the studs from turning when tightening the nuts.

Next, Fig. 4 shows a second example of the embodiment according to the present invention. In the case of the first example described above, a seal ring 28b (see Fig. 1) was located between the inner peripheral surface on the inside end section of the outer ring 6 and the outer peripheral surface on the inside end section of the inner ring 21, however, in this example, an encoder 33 of a rotational speed detection device is provided between the inner peripheral surface of the inside end section of the outer ring 6 and the outer peripheral surface of the inside end section of the inner ring 21. In other words, in this example, the encoder 33 is securely fitted around the outer peripheral surface on the inside end section of the inner ring 21 by interference fit. The encoder 33 comprises a encoder body 35, which is a rubber magnet mixed with a ferrite powder, a rare earth magnetic powder or the like, and that is attached all the way around the circumference of the inside surface in the axial direction of a metal core 34 having an L-shaped cross section. This encoder body 35 is magnetically oriented in the axial direction, with the magnetic orientation alternating at uniform intervals in the circumferential direction. Accordingly, S pole and N pole alternate at uniform intervals in the circumferential direction on the inside surface in the axial direction of the encoder 33.

Also, when the S pole and the N pole of the rubber magnet of the encoder body 35 alternately pass the area near the detection surface of a rotation detecting sensor (not shown in the figure) that is arranged opposite this encoder body 35 through a small gap therebetween, the density of the magnetic flux flowing inside the rotation detecting sensor changes, and thus the output changes is proportional to the rotation detecting sensor. The frequency at which this output changes is proportional to the rotational speed of the wheel, so by sending this output signal to a controller (not shown in the figure), it is possible to properly control an anti lock brake system (ABS) and a traction control system (TCS). The other structures are the same as in the first example as described above.

Next, Fig. 5 shows a third example of the embodiment according to the present invention. The first and second examples as described above are construction for supporting drive wheels (rear wheels for an FR or RR vehicle, front wheels for an FF vehicle, and all of the wheels for a 4WD vehicle), wherein a stationary member that does not rotate in use is taken to be the outer ring 6, and inside in the radial direction of this outer ring 6, a hub 8 as a rotating member that rotates in use is provided. On the other hand, this example uses structure for supporting non-driven wheels (front wheels of an FR or RR vehicle, or rear wheels of an FF vehicle), wherein a stationary member is taken to be a support shaft 36 located in the inner diameter side, and outside in the radial direction of this support shaft 36, a hub 8 as a rotating member is provided. In other words, in the case of this example, first and second inner raceways 22, 24, which are both stationary raceways respectively, are provided around the outer peripheral surface of the support shaft 36 that is securely connected to the end portion of an axle (not shown in the figure) of a suspension device.

The first inner raceway 22 is directly formed on the outer peripheral surface in the middle section of the support shaft 36. Also, in addition to this, an inner ring 21a, which is formed with the second inner raceway 24 around the outer peripheral surface thereof, is securely fitted onto a small diameter stepped portion 23a, which is formed around the outer peripheral surface on the outside end section of the support shaft 36. Moreover, the outside end surface of the inner ring 21a is held in place by a crimped portion 25a that is formed by plastically deforming the outside end section of the support shaft 36.

On the other hand, the hub 8a, which is the rotating member, is formed on the outer side in the radial direction of the support shaft 36. A double row of outer raceways 11a, 11b, which are rotating raceways respectively, are formed around the inner peripheral surface of the hub 8a, and an installation flange 13 is formed around the outer peripheral surface thereof. The wheel 1 of a travelling wheel and the rotor 2 of the braking device (see Fig. 1) are securely connected to the installation surface 14 of the installation flange 13 by studs 9 that are press fitted inside installation holes 15 that are formed in the installation flange 13, and nuts 10 that are screwed onto the studs 9 (see Fig. 1). Furthermore, a plurality of balls 26, which are rolling members respectively, are provided between the outer raceways 11a, 11b and the first and second inner raceways 22, 24, and they are supported by retainers 27 such that they can roll freely. Also, the opening on the outside end of the hub 8a is covered by a cap 37, and the space between the inner peripheral surface on the inside end of the hub 8a and the outer peripheral surface in the middle section of the support shaft 36 is sealed by a seal ring 28a in order to prevent foreign objects from entering the space in which the respective balls 26 are located. The other structures and functions are the same as in the first and second examples described above.

### INDUSTRIAL APPLICABILITY

Since the bearing unit for wheel according to the present invention is constructed and operated as described above, it is possible to sufficiently inhibit unpleasant noise and vibration during braking.

## Claims

1. A bearing unit for wheel comprising: a stationary member which has a stationary raceway and does not rotate even in use; a rotating member which has a rotating raceway and rotates in use; an installation flange provided around the outer peripheral surface of the rotating member; a plurality of installation holes which are formed such that they pass through the installation flange in the axial direction; a plurality of studs fixed to the installation flange by press fitting of the respective base end sections thereof into the installation holes; and rolling members provided between the stationary raceway and rotating raceway; and during use, a rotating member for braking being connected and fixed to an installation surface which is provided on one side surface of the installation flange by the studs and nuts that are screwed onto the studs, wherein a concave groove is formed all the way around the circumference on a part of the installation surface such that it is concave inward from the installation surface, the installation holes are opened in a bottom section of the concave groove, and when W is taken to be the width of the concave groove in the radial direction and d is taken to be the inner diameter of the installation holes, then W = d + (5 to 25 mm).

2. A bearing unit for wheel comprising: a stationary member which has a double row of stationary raceways and does not rotate even in use; a rotating member which has a double row of rotating raceways and rotates in use; an installation flange provided around the outer peripheral surface of the rotating member; a plurality of installation holes which are formed such that they pass through the installation flange in the axial direction; a plurality of studs fixed to the installation flange by press fitting of the respective base end sections thereof into the installation holes; and a plurality of rolling members provided between each of the stationary raceways and a corresponding one of the rotating raceways;
of the stationary member and the rotating member, the member that is located on the inside in the radial direction being provided with a first inner raceway which is the stationary raceway or rotating raceway directly formed around the outer peripheral surface on the middle section in the axial direction, a small diameter stepped portion formed around the outer peripheral surface on one end section in the axial direction, and an inner ring securely fitted onto the small diameter stepped portion,
the inner ring being formed with a second inner raceway, which is the stationary raceway or rotating raceway, and the end surface thereof being held in place by a crimped portion that is formed by plastically deforming one of the end sections of the aforementioned member outward in the radial direction,
and during use, a rotating member for braking being connected and fixed to the installation surface provided on one side surface of the installation flange by the studs and nuts that are screwed onto the studs,
wherein, a concave groove is formed all the way around the circumference on a part of the installation surface having its center at the central axis of the rotating member, such that it is concave inward from the installation surface, the installation
holes are opened in a bottom section of the concave groove, and when W is taken to be the width of the concave groove in the radial direction and d is taken to be the inner diameter of the installation holes, then W = d + (5 to 25 mm).
